# EUROPEAN PATENT APPLICATION

(11) **EP 3 917 202 A1**
(43) Date of publication of application: **01.12.2021**
(21) Application number: 20744813.5
(22) Date of filing: 16.01.2020
(51) Int. Cl.: H04W 24/10, H04W 72/04, H04W 72/12, H04W 28/04

(54) **TERMINAL**

(30) Priority: 21.01.2019 JP 2019020105
(71) Applicant: NTT DOCOMO, INC., Chiyoda-Ku Tokyo 100-6150 (JP)
(72) Inventor: YOSHIOKA, Shohei, Tokyo 100-6150 (JP); NAGATA, Satoshi, Tokyo 100-6150 (JP)
(74) Representative: Hoffmann Eitle
(86) International application number: PCT/JP2020/001221
(87) International publication number: WO 2020/153211

(57) **Abstract**

To appropriately control transmission of uplink control information even when different types of uplink control information are to be transmitted in an overlapping manner. A terminal according to one aspect of the present disclosure includes: a transmitting section that transmits a transmission confirmation signal (HARQ-ACK) and channel state information (CSI); and a control section that determines, when transmission periods of the HARQ-ACK and the CSI using different physical channels are overlapped, a type of uplink control information for transmission and a physical channel for use in the transmission based on whether simultaneous transmission of the HARQ-ACK and the CSI is configured.

## Description

### Technical Field

The present disclosure relates to a terminal in next-generation mobile communication systems.

### Background Art

In Universal Mobile Telecommunications System (UMTS) networks, the specifications of Long Term Evolution (LTE) have been drafted for the purpose of further increasing high speed data rates, providing lower latency and so on (see Non-Patent Literature 1). For the purpose of further high capacity, advancement of LTE (LTE Rel. 8, Rel. 9), and so on, the specifications of LTE-A (LTE-Advanced, LTE Rel. 10, Rel. 11, Rel. 12, Rel. 13) have been drafted.

Successor systems of LTE (referred to as, for example, "FRA (Future Radio Access)," "5G (5th generation mobile communication system)," "5G+ (plus)," "NR (New Radio)," "NX (New radio access)," "FX (Future generation radio access)," "LTE Rel. 14," "LTE Rel. 15" (or later versions), and so on) are also under study.

In existing LTE systems (for example, LTE Rel. 8 to Rel. 13), a user terminal (UE (User Equipment)) transmits uplink control information (UCI) by means of, for example, a UL control channel (for example, a Physical Uplink Control Channel (PUCCH)). A structure (format) of the UL control channel is referred to as a "PUCCH format" and so on.

The UCI includes, for example, retransmission control information (also referred to as a "HARQ-ACK," an "ACK/NACK," an "A/N," and so on) for DL data, a Scheduling Request (SR), Channel State Information (CSI), and so on. Examples of the CSI include periodic CSI (P-CSI), semi-persistent CSI (SP-CSI), and aperiodic CSI (A-CSI).

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

In future radio communication systems (for example, 5G, NR, and so on), in some cases, a transmission period (or a transmission timing) of a HARQ-ACK or SR for DL data (for example, a PDSCH) and a transmission period of channel state information (CSI) may overlap with each other at a given UE. In another case, different physical channels may be configured for use in transmission of the HARQ-ACK and transmission of the CSI.

In these cases, how to control transmission of uplink control information (UCI) is important. In a case where the UCI is not appropriately transmitted, communication throughput may be lowered or communication quality may be deteriorated.

It is accordingly one object of the present disclosure to provide a terminal that can appropriately control transmission of uplink control information even when transmissions of different types of uplink control information overlap with each other. Solution to Problem

A terminal according to one aspect of the present disclosure includes: a transmitting section that transmits a transmission confirmation signal (HARQ-ACK) and channel state information (CSI); and a control section that determines, when transmission periods of the HARQ-ACK and the CSI using different physical channels are overlapped, a type of uplink control information for transmission and a physical channel for use in the transmission, based on whether simultaneous transmission of the HARQ-ACK and the CSI is configured.

### Advantageous Effects of Invention

According to one aspect of the present disclosure, even when transmissions of different types of uplink control information overlap with each other, the transmission of the uplink control information can be appropriately controlled.

### Brief Description of Drawings

FIG. 1 is a diagram to show an example of a case where a transmission period of a HARQ-ACK/SR and a transmission period of CSI are overlapped;
FIG. 2 is a diagram to show an example of transmission control performed when simultaneous transmission of the HARQ-ACK/SR and the CSI is configured;
FIG. 3 is a diagram to show an example of transmission control performed when simultaneous transmission of the HARQ-ACK/SR and the CSI is not configured;
FIG. 4 is a diagram to show another example of transmission control performed when simultaneous transmission of the HARQ-ACK/SR and the CSI is not configured;
FIG. 5 is a diagram to show another example of transmission control performed when simultaneous transmission of the HARQ-ACK/SR and the CSI is not configured;
FIG. 6 is a diagram to show another example of transmission control performed when simultaneous transmission of the HARQ-ACK/SR and the CSI is not configured;
FIG. 7 is a diagram to show an example of a schematic structure of a radio communication system according to one embodiment;
FIG. 8 is a diagram to show an example of a structure of a base station according to one embodiment;
FIG. 9 is a diagram to show an example of a structure of a user terminal according to one embodiment; and
FIG. 10 is a diagram to show an example of a hardware structure of the base station and the user terminal according to one embodiment.

### Description of Embodiments

The NR supports a reference signal used to measure a channel state in a downlink. For example, the reference signal for measuring a channel state is also referred to as a "CSI-RS (Channel State Information-Reference Signal)," and is used to measure CSI, for example, a CQI (Channel Quality Indicator), a PMI (Precoding Matrix Indicator), an RI (Rank Indicator), and so on as a channel state.

A user terminal (UE) feeds back a result of measurement based on the reference signal for measuring a channel state, as channel state information (CSI), to a radio base station (that can be a network, an eNB, a gNB, a transmission/reception point, and so on) at a given timing.

Regarding a method of feeding back CSI, CSI to be periodically reported (P-CSI), CSI to be reported by means of a resource (SP-CSI) designated semi persistently, and CSI report to be aperiodically reported (A-CSI) are defined.

In the case of P-CSI reporting, the UE feeds back the P-CSI at every given period (for example, every five subframe period, every ten subframe period, and so on). In a case of no transmission of uplink data (for example, a PUSCH) at a given timing (given subframe) at which the P-CSI is reported, the UE transmits the P-CSI by means of an uplink control channel (for example, a PUCCH).

In a case where CA is applied, the UE transmits the P-CSI by means of an uplink control channel of a given cell (for example, a PCell, a PUCCH cell, a PSCell). Meanwhile, when transmission of uplink data is performed at a given timing, the UE can transmit the P-CSI by means of an uplink shared channel.

In a case of SP-CSI reporting, when an SP-CSI report resource (also referred to as an "SP-CSI resource") is designated, the UE reports the CSI by periodically using a resource based on the same assumption until another SP-CSI resource is designated. The SP-CSI resource may be a resource configured by higher layer signaling or a resource designated by an activation signal of the SP-CSI report.

In the case of A-CSI reporting, the UE transmits the A-CSI according to a CSI trigger (CSI request) from the radio base station. For example, the UE reports the A-CSI at a given timing (for example, 4 subframes) after reception of the CSI trigger.

The CSI trigger notified from the radio base station is included in downlink control information transmitted on a downlink control channel. For example, the UE transmits the A-CSI by means of the uplink shared channel (for example, the PUSCH) according to a trigger included in downlink control information for UL grant (for example, DCI format 0_1). Note that the A-CSI may be transmitted on the uplink control channel.

The UE transmits the above-described CSI as the uplink control information (UCI) to the base station. The UE also transmits, as the UCI, a scheduling request (SR) that requests scheduling of the HARQ-ACK or PUSCH for DL transmission (for example, a PDSCH) as well as the CSI, to the base station.

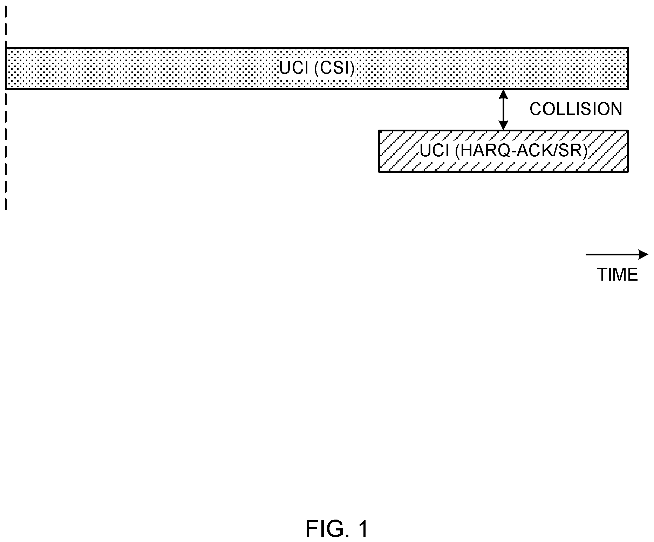

When a plurality of types of information are to be transmitted as the UCI as described above, it is conceivable that a transmission period of at least one of the HARQ-ACK and the SR (hereinafter also referred to as a "HARQ-ACK/SR") and a transmission period of the CSI may be overlapped (see FIG. 1). For example, there is a case where a PUCCH resource allocated to the HARQ-ACK/SR and a PUCCH resource allocated to the CSI are overlapped in a time domain.

It is conceivable that when the HARQ-ACK/SR transmission and the CSI transmission are overlapped, both of the HARQ-ACK/SR and the CSI may be multiplexed on the PUCCH resource and then transmitted.

For example, in a case of simultaneously transmitting (or simultaneously multiplexing) the HARQ-ACK/SR and the CSI, the UE transmits UCI including HARQ-ACK bits, SR bits, and CSI bits.

The base station may configure for the UE simultaneous transmission (or simultaneous multiplexing) of the HARQ-ACK and the CSI by using a higher layer (for example, RRC signaling and so on) and notifies the UE to perform the simultaneous transmission when the HARQ-ACK transmission and the CSI transmission are overlapped.

Information (higher layer parameter) regarding the simultaneous transmission of the HARQ-ACK and the CSI, which is notified to the UE from the base station, may be also referred to as "SimultaneousHARQ-ACK-CSI."

For example, the UE controls the simultaneous transmission of the HARQ-ACK and the CSI based on a notification as to a higher layer parameter (SimultaneousHARQ-ACK-CSI = true) indicating application of the simultaneous transmission of the HARQ-ACK and the CSI.

By allowing the simultaneous transmission of the HARQ-ACK/SR and the CSI as described above, even when the transmission period of the HARQ-ACK/SR and the transmission period of the CSI are overlapped, the UCI can be appropriately transmitted.

Meanwhile, there is another case where CSI transmission using the uplink shared channel (for example, the PUSCH) is designated as indicated above. For example, the base station indicates, to the UE, transmission of at least one of the A-CSI and the SP-CSI by means of the PUSCH.

In this case, it is an issue how to control transmission of the UCI (for example, transmission of the HARQ-ACK/SR and transmission of the CSI) when at least part of the transmission period of the HARQ-ACK/SR on the PUCCH and the transmission period of the CSI on the PUSCH are overlapped.

The inventors of the present invention focused on the case where transmission periods for HARQ-ACK/SR and the CSI using different physical channels are indicated such that the transmission periods are overlapped in a time domain and came up with the idea of controlling transmission of the HARQ-ACK/SR and the CSI in consideration of such a case.

Embodiments according to the present invention will be described in detail with reference to the drawings as follows. CSI as described below is applicable to at least one of P-CSI, SP-CSI, and A-CSI. In the following description, a case of multiplexing an SR on the same PUCCH as that for an HARQ-ACK when the SR is to be transmitted is described by way of example, but the present disclosure is not limited thereto. Moreover, the case where HARQ-ACK/SR transmission and CSI transmission are overlapped may correspond to a case where at least part of a transmission period of the HARQ-ACK/SR and a transmission period of the CSI are overlapped.

In the following description, configuration for the UE as to simultaneous transmission of the HARQ-ACK and the CSI may be implemented by configuring a given higher layer parameter (for example, SimultaneousHARQ-ACK-CSI). For example, when a given higher layer parameter (for example, SimultaneousHARQ-ACK-CSI) is configured as configuration (for example, true), the UE may determine to apply simultaneous transmission of the HARQ-ACK/SR and the CSI.

On the other hand, when a given higher layer parameter (for example, SimultaneousHARQ-ACK-CSI) is not configured (or not notified or received), the UE may determine not to apply simultaneous transmission of the HARQ-ACK/SR and the CSI. Alternatively, when a given higher layer parameter (for example, SimultaneousHARQ-ACK-CSI) is configured to a value other than a given value (for example, true), the UE may determine not to apply simultaneous transmission of the HARQ-ACK/SR and the CSI.

Alternatively, in the case of transmitting to a base station a higher layer parameter (for example, mux-SR-HARQ-ACK-CSI-PUCCH = false) indicating that the UE capability does not support simultaneous transmission of the HARQ-ACK and the CSI, the UE may determine that a given higher layer parameter (for example, SimultaneousHARQ-ACK-CSI) is not configured (or determine not to apply simultaneous transmission of the HARQ-ACK/SR and the CSI.)

Alternatively, in the case of not transmitting to the base station a higher layer parameter (for example, mux-SR-HARQ-ACK-CSI-PUCCH) indicating that the UE capability does not support simultaneous transmission of the HARQ-ACK and the CSI, the UE may determine that a given higher layer parameter (for example, SimultaneousHARQ-ACK-CSI) is not configured (or determine not to apply simultaneous transmission of the HARQ-ACK/SR and the CSI.)

When transmission periods of the HARQ-ACK and the CSI using different physical channels (for example, the PUCCH and the PUSCH) are overlapped, the UE may determine a type of uplink control information for transmission and a physical channel for use in the transmission based on whether simultaneous transmission of the HARQ-ACK and the CSI is configured. The following description is given of an example of operations performed when simultaneous transmission of the HARQ-ACK and the CSI is configured and when the simultaneous transmission is not configured.

### (Case of Configuring Simultaneous Transmission of HARQ-ACK/SR and CSI)

When CSI using the PUSCH (for example, allocated with a PUSCH resource) and HARQ-ACK using the PUCCH (for example, allocated with a PUCCH resource) are overlapped in the time domain, the UE controls transmission of the UCI based on whether the given higher layer parameter regarding simultaneous transmission of the HARQ-ACK and the CSI is configured.

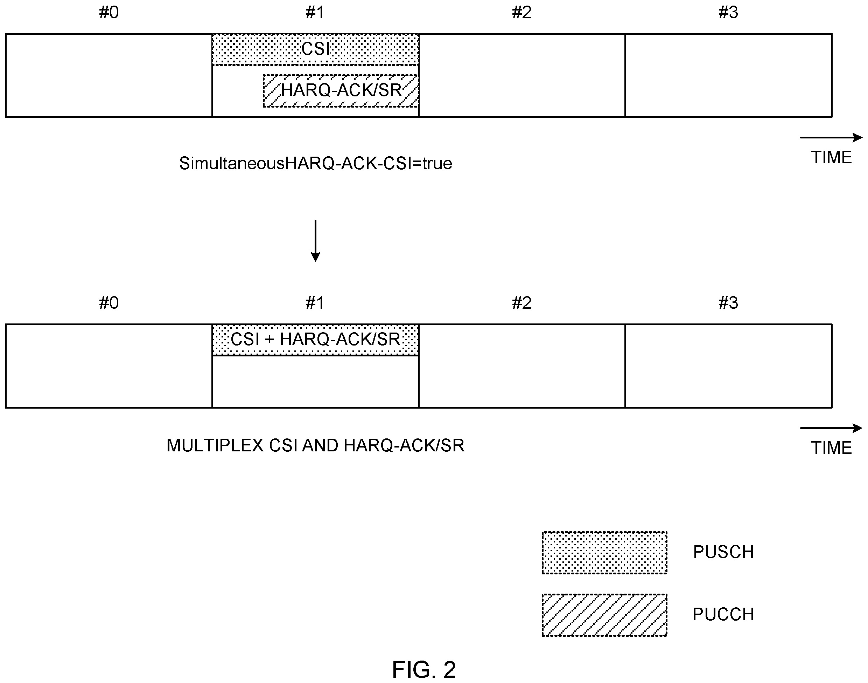

When a given layer parameter (for example, SimultaneousHARQ-ACK-CSI = true) regarding simultaneous transmission of the HARQ-ACK and the CSI is configured, the UE multiplexes the HARQ-ACK and the CSI with overlapped transmission periods on a given physical channel and then transmits the multiplexed information (see FIG. 2) .

The given physical channel may be, for example, the PUSCH.

FIG. 2 shows a case where, when HARQ-ACK/SR transmission using the PUCCH and CSI transmission using the PUSCH are overlapped in Slot #1, the UE multiplexes the CSI and the HARQ-ACK/SR on the PUSCH and then transmits the multiplexed information.

A resource of the PUSCH on which the HARQ-ACK and the CSI are multiplexed may be configured by higher layer signaling (for example, a higher layer parameter). Alternatively, the UE may use a PUSCH resource designated by downlink control information (for example, DCI) or use a PUSCH resource designated by a combination of DCI and information from the higher layer signaling.

As described above, in the case where a given higher layer parameter regarding simultaneous transmission of the HARQ-ACK and the CSI is configured, the UE multiplexes CSI using the PUSCH and HARQ-ACK using the PUCCH which are configured (or scheduled) with overlapped transmission periods, on the PUSCH and then transmits the multiplexed information.

As a result, both of the HARQ-ACK and the CSI can be simultaneously transmitted.

### (Case of Not Configuring Simultaneous Transmission of HARQ-ACK/SR and CSI)

When a given higher layer parameter (for example, SimultaneousHARQ-ACK-CSI=true) regarding simultaneous transmission of the HARQ-ACK and the CSI is not configured, and CSI using the PUSCH and HARQ-ACK using the PUCCH are overlapped in the time domain, the UE may apply at least one of Operations 1 to 3 below.

Note that when simultaneous transmission of the HARQ-ACK/SR and the CSI is applied, the above-described operation may be applied.

### <Operation 1>

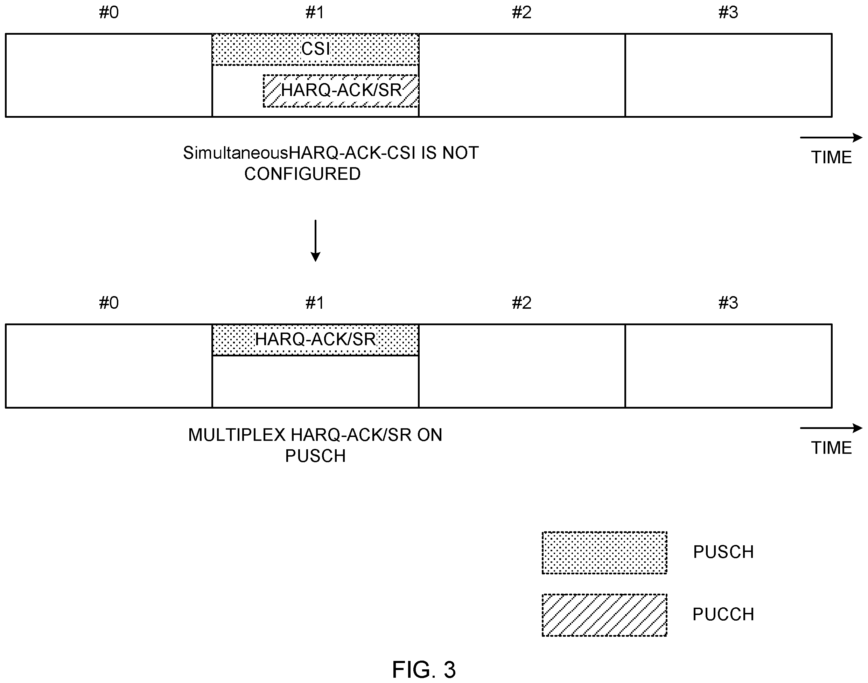

The UE may perform control so as to transmit one UCI (for example, the HARQ-ACK) by means of the PUSCH and drop the other UCI (for example, the CSI) (see FIG. 3). FIG. 3 shows the case where, when HARQ-ACK transmission using the PUCCH and CSI transmission using the PUSCH are overlapped in Slot #1, the UE drops the CSI and transmits the HARQ-ACK/SR by means of the PUSCH.

In this case, the UE may multiplex HARQ-ACK (for example, HARQ-ACK including the SR or HARQ-ACK including no SR) on the PUSCH that is configured for use in CSI transmission.

Note that when UL data using the PUSCH (for example, a UL-SCH) is scheduled, the UE may multiplex the HARQ-ACK and the UL data on the PUSCH and then transmit the multiplexed information.

In a case of dropping the other UCI (for example, the CSI), the UE may perform control so as not to transmit the other UCI. Alternatively, the UE may perform control so as not to transmit the other CSI simultaneously with at least the one UCI (for example, the HARQ-ACK), and change (or delay) a transmission timing so as to avoid such a situation that a transmission period of the one UCI and a transmission period of the other UCI are overlapped. The delayed UCI may be transmitted at the earliest possible timing (for example, the next slot of a colliding slot) at which the UE can transmit the UCI, or may be transmitted based on a given transmission timing.

The UCI, the transmission timing of which is delayed, may be transmitted using a resource previously configured for the UCI as it is, or using a newly configured resource. Alternatively, the delayed UCI may be transmitted using a pre-configured default resource. As a result, it is possible to transmit both of the HARQ-ACK/SR and the CSI and thus to suppress deterioration of communication quality.

Through the above control on the operation at the time of collision, even when CSI transmission and HARQ-ACK transmission using different physical channels are overlapped in the same time domain at the UE to which a given higher layer parameter regarding simultaneous transmission of the HARQ-ACK and the CSI is not configured, the transmission of the UCI can be appropriately controlled.

### <Operation 2>

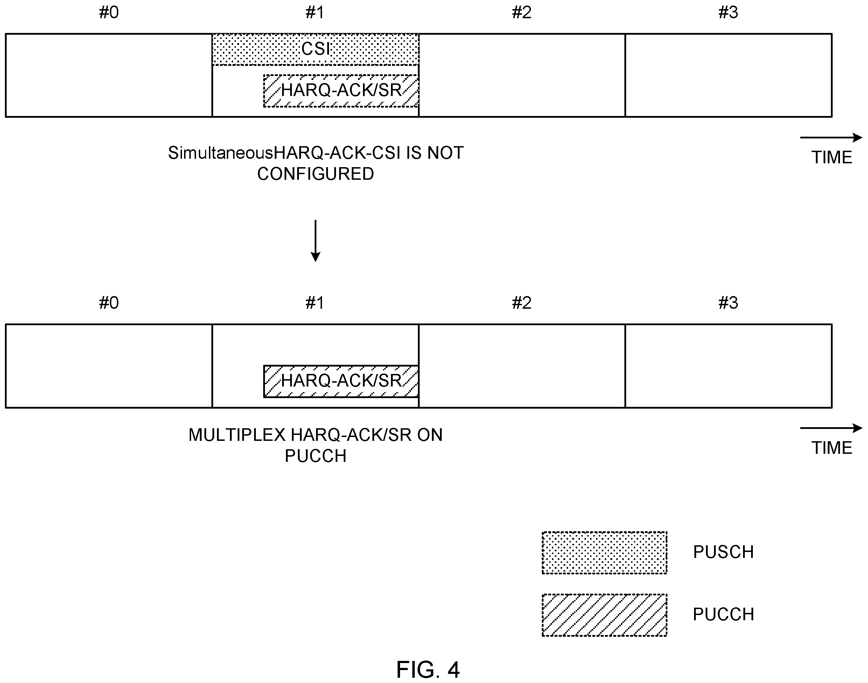

The UE may perform control so as to transmit one UCI (for example, the HARQ-ACK) by means of the PUCCH and drop the PUSCH (for example, the other CSI) (see FIG. 4). FIG. 4 shows the case where, when HARQ-ACK transmission using the PUCCH and CSI transmission using the PUSCH are overlapped in Slot #1, the UE drops the PUSCH and transmits the HARQ-ACK/SR by means of the PUCCH.

In this case, the UE may multiplex the HARQ-ACK (for example, HARQ-ACK including the SR and HARQ-ACK including no SR) on the PUCCH that is configured for use in the HARQ-ACK transmission. Note that when UL data using the PUSCH (for example, the UL-SCH) is scheduled, the UE may drop the UL data.

In a case of dropping the PUSCH (or the other UCI (for example, CSI)), the UE may perform control so as not to transmit the PUSCH. Alternatively, the UE may perform control so as not to transmit the other CSI simultaneously with at least the one UCI (for example, the HARQ-ACK), and change (or delay) a transmission timing so as to avoid such a situation that a transmission duration of the one UCI and a transmission duration of the other UCI are overlapped. The delayed UCI may be transmitted at the earliest possible timing (for example, the next slot of the colliding slot) at which the UE can transmit the UCI, or may be transmitted based on a given transmission timing.

The UCI, the transmission timing of which is delayed, may be transmitted using a resource previously configured for the UCI as it is, or using a newly configured resource. Alternatively, the delayed UCI may be transmitted using a pre-configured default resource. As a result, it is possible to transmit both of the HARQ-ACK/SR and the CSI and thus to suppress deterioration of the communication quality.

Through the above control on the operation at the time of collision, even when CSI transmission and HARQ-ACK transmission using different physical channels are overlapped in the same time domain at the UE to which a given higher layer parameter regarding simultaneous transmission of the HARQ-ACK and the CSI is not configured, the transmission of the UCI can be appropriately controlled.

### <Operation 3>

The UE may select a physical channel for use in transmission of part of UCI based on the presence/absence of data (for example, the UL-SCH) using the PUSCH.

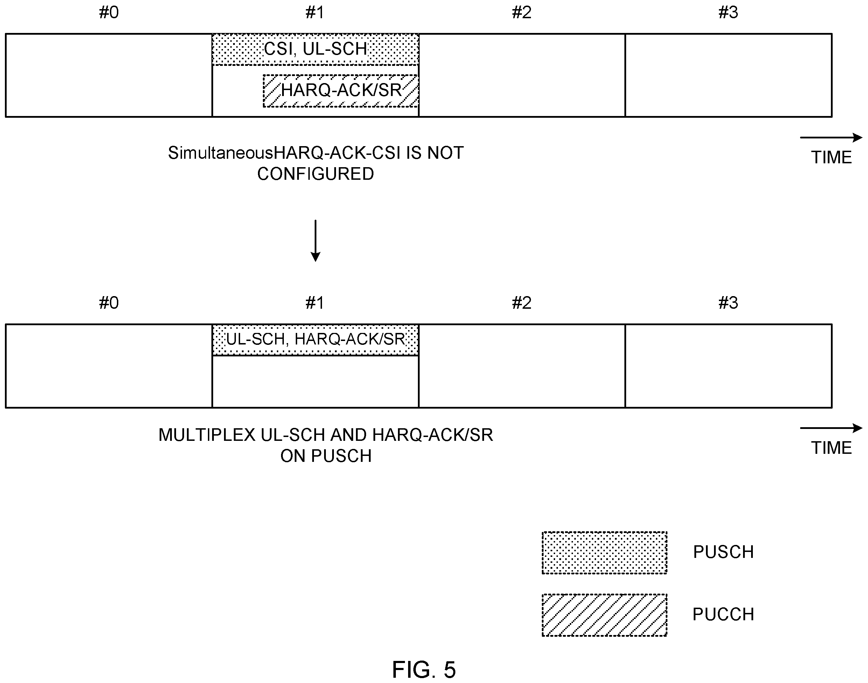

For example, when the PUSCH used for CSI transmission includes data (or data transmission using the PUSCH is scheduled), the UE may perform control so as to transmit one UCI (for example, the HARQ-ACK) by means of the PUSCH and drop the other UCI (for example, CSI) (see FIG. 5).

FIG. 5 shows the case where, when HARQ-ACK transmission using the PUCCH and CSI transmission using the PUSCH are overlapped in Slot #1, the UE drops the CSI and transmits the HARQ-ACK/SR by means of the PUSCH.

In this case, the UE may multiplex the HARQ-ACK (for example, HARQ-ACK including the SR and HARQ-ACK including no SR) on the PUSCH that is configured for use in the data transmission and the CSI transmission. As a result, it is possible to transmit both of the data and the HARQ-ACK.

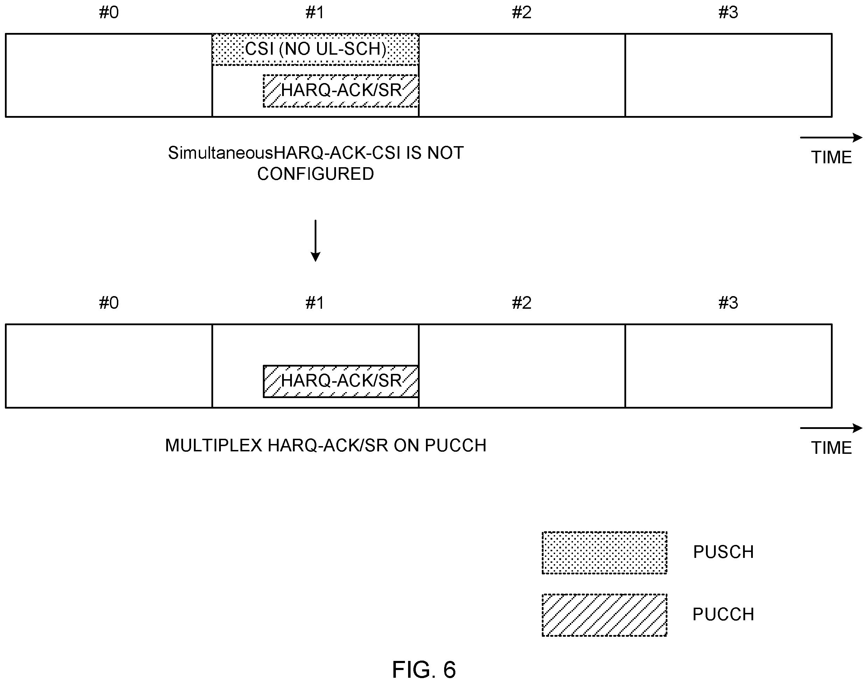

Meanwhile, when the PUSCH used for CSI transmission includes no data (or data transmission using the PUSCH is not scheduled), the UE may perform control so as to transmit the one UCI (for example, the HARQ-ACK) by means of the PUCCH and drop the PUSCH (for example, the other CSI) (see FIG. 6).

FIG. 6 shows the case where, when HARQ-ACK transmission using the PUCCH and CSI transmission using the PUSCH (with no data) are overlapped in Slot #1, the UE drops the PUSCH and transmits the HARQ-ACK/SR by means of the PUCCH.

In this case, the UE may multiplex the HARQ-ACK (for example, HARQ-ACK including the SR or HARQ-ACK including no SR) on the PUCCH that is configured for use in the HARQ-ACK transmission.

As described above, through the selection of a physical channel for use in transmission of part of UCI (for example, HARQ-ACK) based on the presence of data transmission using the PUSCH, the scheduled data can be transmitted when such data is present. On the other hand, when no scheduled data is present, a reliability of UCI transmission can be improved by using the PUCCH.

### <Variation>

When a given higher layer parameter (for example, SimultaneousHARQ-ACK-CSI = true) regarding simultaneous transmission of the HARQ-ACK and the CSI is not configured, the UE may assume that CSI transmission using the PUSCH and HARQ-ACK/SR transmission using the PUCCH are not overlapped in the time domain. Alternatively, when the given higher layer parameter regarding simultaneous transmission of the HARQ-ACK and the CSI is not configured, the UE may assume that the PUSCH used for CSI transmission and the PUCCH used for HARQ-ACK/SR transmission are not configured (or not scheduled) in overlapped time domains.

As described above, when a given higher layer parameter regarding simultaneous transmission of the HARQ-ACK and the CSI is not configured, it is possible, by limiting the timing of CSI transmission using the PUSCH and timing of HARQ-ACK/SR transmission using the PUCCH, to simplify the UE operation as well as eliminate necessity to drop a part of the UCI.

The foregoing description is given of the case where, when a given higher layer parameter regarding simultaneous transmission of the HARQ-ACK and the CSI is not configured and CSI using the PUSCH and HARQ-ACK using the PUCCH are overlapped in the time domain, a part of the UCI (for example, CSI) is dropped. However, the present disclosure is not limited thereto.

It is also possible to perform control so as to prioritize the CSI transmission and drop the HARQ-ACK/SR.

Alternatively, in the case of transmission using a given physical channel (for example, the PUSCH) (for example, FIG. 3 and FIG. 5), it may perform control so as to multiplex (or transmit) both of the HARQ-ACK/SR and the CSI. In this case, a given higher layer parameter (for example, SimultaneousHARQ-ACK-CSI = true) regarding simultaneous transmission of the HARQ-ACK and the CSI may be interpreted to have a structure that is to be applied in the case of using the same physical channel (for example, the PUCCH).

When simultaneous transmission on the PUCCH and the PUSCH is configured, the UE may perform control so as to transmit the HARQ-ACK/SR using a configured PUCCH resource and transmit the CSI on the PUSCH.

Alternatively, the UE may perform control so as to transmit the CSI using a configured PUCCH resource and transmit the HARQ-ACK/SR on the PUSCH. As a result, it is possible to transmit both of the HARQ-ACK/SR and the CSI at a configured timing and thus to suppress reduction in throughput.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

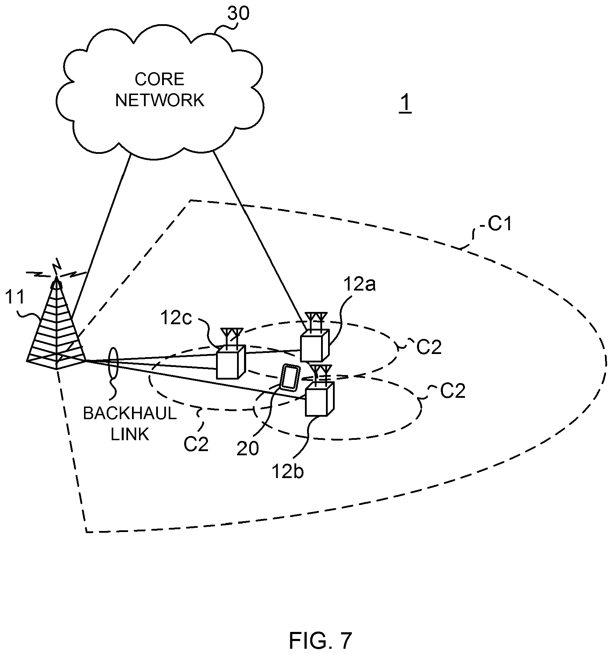

FIG. 7 is a diagram to show an example of a schematic structure of the radio communication system according to one embodiment. The radio communication system 1 may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6GHz or less (sub-6GHz), and FR2 may be a frequency band which is higher than 24GHz (above-24GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a given search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be also referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be also referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

### (Base Station)

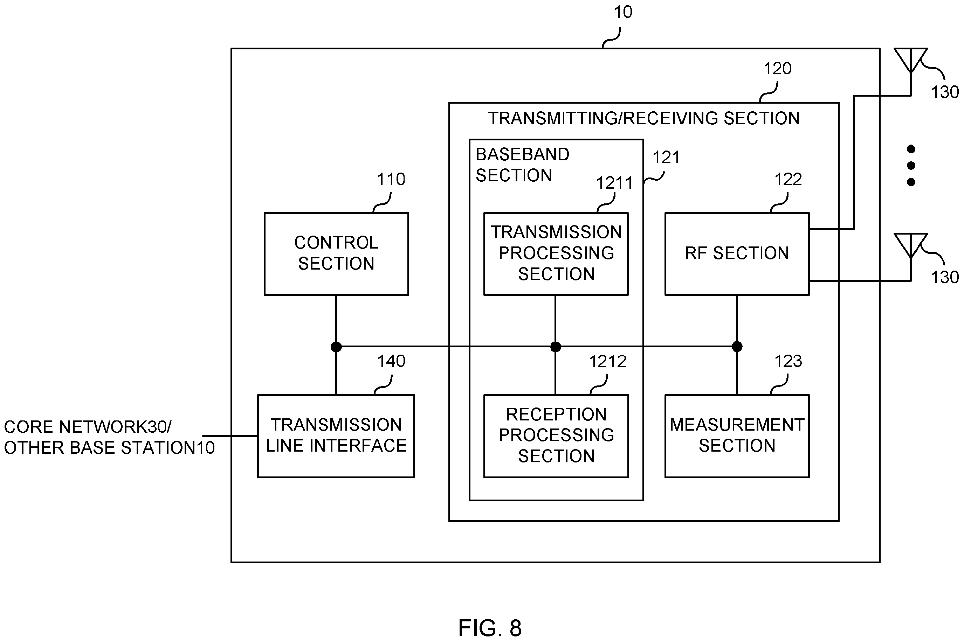

FIG. 8 is a diagram to show an example of a structure of the base station according to one embodiment. The base station 10 includes a control section 110, a transmitting/receiving section 120, transmitting/receiving antennas 130 and a transmission line interface (transmission line interface) 140. Note that the base station 10 may include one or more control sections 110, one or more transmitting/receiving sections 120, one or more transmitting/receiving antennas 130, and one or more transmission line interfaces 140.

Note that, the present example primarily shows functional blocks that pertain to characteristic parts of the present embodiment, and the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the transmission line interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The transmission line interface 140 may perform transmission/reception (backhaul signaling) of a signal with an apparatus included in the core network 30 or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the transmission line interface 140.

Note that the transmitting/receiving section 120 receives a transmission confirmation signal (HARQ-ACK) and channel state information (CSI).

When transmission periods of the HARQ-ACK and the CSI using different physical channels are overlapped, the control section 110 may determine the type of uplink control information for reception and a physical channel for the reception, based on whether simultaneous transmission of the HARQ-ACK and the CSI is configured.

### (User Terminal)

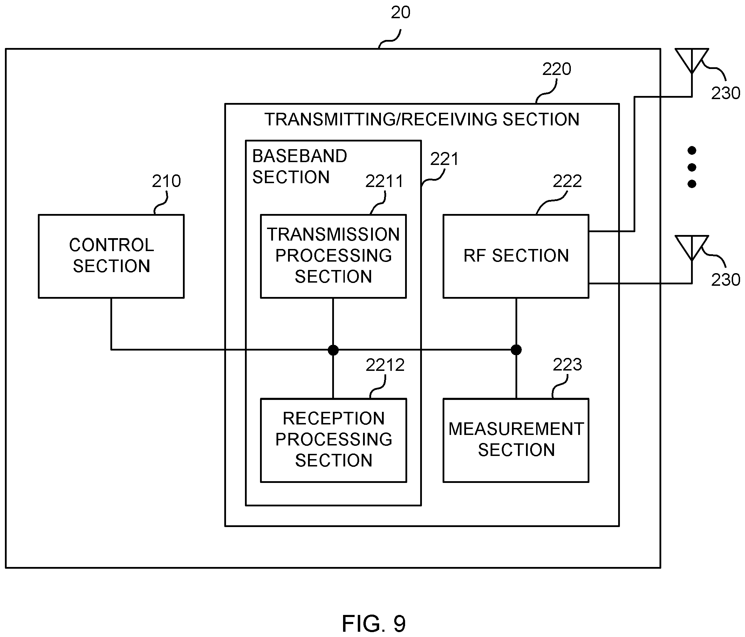

FIG. 9 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a given channel (for example, PUSCH), the DFT processing as the above-described transmission processing to transmit the channel by using a DFT-s-OFDM waveform if transform precoding is enabled, and otherwise, does not need to perform the DFT processing as the above-described transmission process.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply a receiving process such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220 and the transmitting/receiving antennas 230.

Note that the transmitting/receiving section 220 transmits the transmission confirmation signal (HARQ-ACK) and the channel state information (CSI).

When transmission periods of the HARQ-ACK and the CSI using different physical channels are overlapped, the control section 210 determines the type of uplink control information for transmission and a physical channel for use in the transmission, based on whether simultaneous transmission of the HARQ-ACK and the CSI is configured.

For example, when simultaneous transmission of the HARQ-ACK and the CSI is not configured, and a transmission period of the HARQ-ACK using the uplink control channel and a transmission period of the CSI using the uplink shared channel are overlapped, the control section 210 may transmit the HARQ-ACK by means of the uplink shared channel and drop the CSI.

Alternatively, when simultaneous transmission of the HARQ-ACK and the CSI is not configured, and a transmission period of the HARQ-ACK using the uplink control channel and a transmission period of the CSI using the uplink shared channel are overlapped, the control section 210 may transmit the HARQ-ACK by means of the uplink control channel and drop the uplink shared channel.

Alternatively, when simultaneous transmission of the HARQ-ACK and the CSI is not configured, a transmission period of the HARQ-ACK using the uplink control channel and a transmission period of the CSI using the uplink shared channel are overlapped, and data transmission using the uplink shared channel is present, the control section 210 may transmit the HARQ-ACK by means of the uplink shared channel and drop the CSI.

Alternatively, when simultaneous transmission of the HARQ-ACK and the CSI is not configured, a transmission period of the HARQ-ACK using the uplink control channel and a transmission period of the CSI using the uplink shared channel are overlapped, and data transmission using the uplink shared channel is not present, the control section 210 may transmit the HARQ-ACK by means of the uplink control channel and drop the uplink shared channel.

Alternatively, when simultaneous transmission of the HARQ-ACK and the CSI is not configured, the control section 210 may assume that a transmission period of the HARQ-ACK using the uplink control channel and a transmission period of the CSI using the uplink shared channel are configured not to be overlapped.

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining softwares into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

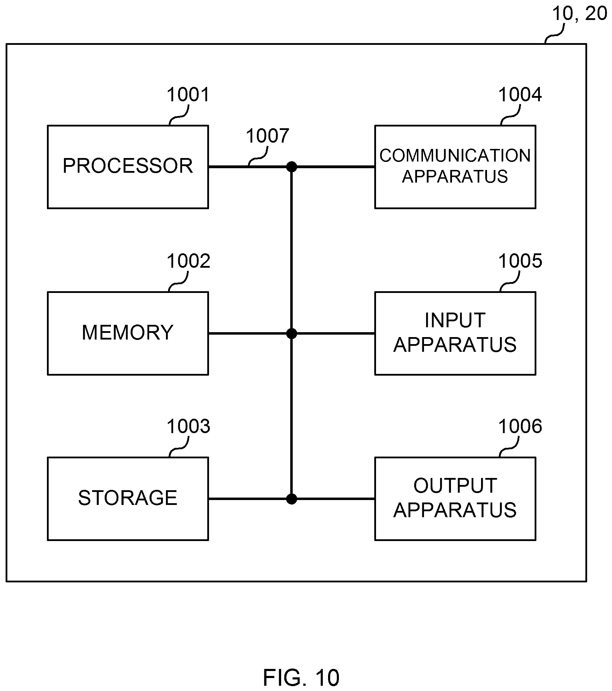

For example, a base station, a user terminal, and so on according to one embodiment of the present disclosure may function as a computer that executes the processes of the radio communication method of the present disclosure. FIG. 10 is a diagram to show an example of a hardware structure of the base station and the user terminal according to one embodiment. Physically, the above-described base station 10 and user terminal 20 may each be formed as computer an apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the user terminal 20 may be configured to include one or more of apparatuses shown in the drawings, or may be configured not to include part of apparatuses.

For example, although only one processor 1001 is shown, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminals 20 is implemented, for example, by allowing given software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least part of the above-described control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via at least one of wired and wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmitting/receiving section 120 (220), the transmitting/receiving antennas 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the user terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

### (Variations)

Note that the terminology described in the present disclosure and the terminology that is needed to understand the present disclosure may be replaced by other terms that convey the same or similar meanings. For example, a "channel," a "symbol," and a "signal" (or signaling) may be interchangeably interpreted. Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a given signal or channel. For example, numerology may indicate at least one of a subcarrier spacing (SCS), a bandwidth, a symbol length, a cyclic prefix length, a transmission time interval (TTI), the number of symbols per TTI, a radio frame structure, a particular filter processing performed by a transceiver in the frequency domain, a particular windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a "TTI," a plurality of consecutive subframes may be referred to as a "TTI," or one slot or one mini-slot may be referred to as a "TTI." That is, at least one of a subframe and a TTI may be a subframe (1 ms) in existing LTE, may be a shorter period than 1 ms (for example, 1 to 13 symbols), or may be a longer period than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a base station schedules the allocation of radio resources (such as a frequency bandwidth and transmit power that are available for each user terminal) for the user terminal in TTI units. Note that the definition of TTIs is not limited to this.

TTIs may be transmission time units for channel-encoded data packets (transport blocks), code blocks, or codewords, or may be the unit of processing in scheduling, link adaptation, and so on. Note that, when TTIs are given, the time interval (for example, the number of symbols) to which transport blocks, code blocks, codewords, or the like are actually mapped may be shorter than the TTIs.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe," a "long subframe," a "slot" and so on. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for given numerology in a given carrier. Here, a common RB may be specified by an index of the RB based on the common reference point of the carrier. A PRB may be defined by a given BWP and may be numbered in the BWP.

The BWP may include a UL BWP (BWP for the UL) and a DL BWP (BWP for the DL). One or a plurality of BWPs may be configured in one carrier for a UE.

At least one of configured BWPs may be active, and a UE does not need to assume to transmit/receive a given signal/channel outside active BWPs. Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in the present disclosure may be represented in absolute values or in relative values with respect to given values, or may be represented in another corresponding information. For example, radio resources may be specified by given indices.

The names used for parameters and so on in the present disclosure are in no respect limiting. Furthermore, mathematical expressions that use these parameters, and so on may be different from those expressly disclosed in the present disclosure. For example, since various channels (PUCCH, PDCCH, and so on) and information elements can be identified by any suitable names, the various names allocated to these various channels and information elements are in no respect limiting.

The information, signals, and so on described in the present disclosure may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output in at least one of from higher layers to lower layers and from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Reporting of information is by no means limited to the aspects/embodiments described in the present disclosure, and other methods may be used as well. For example, reporting of information in the present disclosure may be implemented by using physical layer signaling (for example, downlink control information (DCI), uplink control information (UCI), higher layer signaling (for example, Radio Resource Control (RRC) signaling, broadcast information (master information block (MIB), system information blocks (SIBs), and so on), Medium Access Control (MAC) signaling and so on), and other signals or combinations of these.

Note that physical layer signaling may be referred to as "Layer 1/Layer 2 (L1/L2) control information (L1/L2 control signals)," "L1 control information (L1 control signal)," and so on. Also, RRC signaling may be referred to as an "RRC message," and can be, for example, an RRC connection setup message, an RRC connection reconfiguration message, and so on. Also, MAC signaling may be reported using, for example, MAC control elements (MAC CEs).

Also, reporting of given information (for example, reporting of "X holds") does not necessarily have to be reported explicitly, and can be reported implicitly (by, for example, not reporting this given information or reporting another piece of information).

Determinations may be made in values represented by one bit (0 or 1), may be made in Boolean values that represent true or false, or may be made by comparing numerical values (for example, comparison against a given value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using at least one of wired technologies (coaxial cables, optical fiber cables, twisted-pair cables, digital subscriber lines (DSL), and so on) and wireless technologies (infrared radiation, microwaves, and so on), at least one of these wired technologies and wireless technologies are also included in the definition of communication media.

The terms "system" and "network" used in the present disclosure can be used interchangeably. The "network" may mean an apparatus (for example, a base station) included in the network.

In the present disclosure, the terms such as "precoding," a "precoder," a "weight (precoding weight)," "quasi-co-location (QCL)," a "Transmission Configuration Indication state (TCI state)," a "spatial relation," a "spatial domain filter," a "transmit power," "phase rotation," an "antenna port," an "antenna port group," a "layer," "the number of layers," a "rank," a "resource," a "resource set," a "resource group," a "beam," a "beam width," a "beam angular degree," an "antenna," an "antenna element," a "panel," and so on can be used interchangeably.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," and so on. Note that at least one of a base station and a mobile station may be device mounted on a mobile body or a mobile body itself, and so on. The mobile body may be a vehicle (for example, a car, an airplane, and the like), may be a mobile body which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor, and the like.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)," "Vehicle-to-Everything (V2X)," and the like). In this case, user terminals 20 may have the functions of the base stations 10 described above. The words "uplink" and "downlink" may be interpreted as the words corresponding to the terminal-to-terminal communication (for example, "side"). For example, an uplink channel, a downlink channel and so on may be interpreted as a side channel.

Likewise, the user terminal in the present disclosure may be interpreted as base station. In this case, the base station 10 may have the functions of the user terminal 20 described above.

Actions which have been described in the present disclosure to be performed by a base station may, in some cases, be performed by upper nodes. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, and so on that have been used to describe the aspects/embodiments in the present disclosure may be reordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced based on these. A plurality of systems may be combined (for example, a combination of LTE or LTE-A and 5G, and the like) and applied.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "judging (determining)" as in the present disclosure herein may encompass a wide variety of actions. For example, "judging (determining)" may be interpreted to mean making "judgments (determinations)" about judging, calculating, computing, processing, deriving, investigating, looking up, search and inquiry (for example, searching a table, a database, or some other data structures), ascertaining, and so on.

Furthermore, "judging (determining)" may be interpreted to mean making "judgments (determinations)" about receiving (for example, receiving information), transmitting (for example, transmitting information), input, output, accessing (for example, accessing data in a memory), and so on.

In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

In addition, "judging (determining)" may be interpreted as "assuming," "expecting," "considering," and the like.

The terms "connected" and "coupled," or any variation of these terms as used in the present disclosure mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other." Note that the phrase may mean that "A and B is each different from C." The terms "separate," "be coupled," and so on may be interpreted similarly to "different."

When terms such as "include," "including," and variations of these are used in the present disclosure, these terms are intended to be inclusive, in a manner similar to the way the term "comprising" is used. Furthermore, the term "or" as used in the present disclosure is intended to be not an exclusive disjunction.

For example, in the present disclosure, when an article such as "a," "an," and "the" in the English language is added by translation, the present disclosure may include that a noun after these articles is in a plural form.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the spirit and scope of the invention defined by the recitations of claims. Consequently, the description of the present disclosure is provided only for the purpose of explaining examples, and should by no means be construed to limit the invention according to the present disclosure in any way.

The present application is based on Japanese Patent Application No. 2019-020105 filed on January 21, 2019. The content thereof is hereby incorporated in its entirety.

## Claims

1. A terminal comprising:
a transmitting section that transmits a transmission confirmation signal (HARQ-ACK) and channel state information (CSI); and
a control section that determines, when transmission periods of the HARQ-ACK and the CSI using different physical channels are overlapped, a type of uplink control information for transmission and a physical channel for use in the transmission, based on whether simultaneous transmission of the HARQ-ACK and the CSI is configured.

2. The terminal according to claim 1, wherein
when simultaneous transmission of the HARQ-ACK and the CSI is not configured, and the transmission period of the HARQ-ACK using an uplink control channel and the transmission period of the CSI using an uplink shared channel are overlapped, the control section transmits the HARQ-ACK by means of the uplink shared channel and drops the CSI.

3. The terminal according to claim 1, wherein
when simultaneous transmission of the HARQ-ACK and the CSI is not configured, and the transmission period of the HARQ-ACK using an uplink control channel and the transmission period of the CSI using an uplink shared channel are overlapped, the control section transmits the HARQ-ACK by means of the uplink control channel and drops the uplink shared channel.

4. The terminal according to claim 1, wherein
when simultaneous transmission of the HARQ-ACK and the CSI is not configured, the transmission period of the HARQ-ACK using an uplink control channel and the transmission period of the CSI using an uplink shared channel are overlapped, and data transmission by means of the uplink shared channel is present, the control section transmits the HARQ-ACK by means of the uplink shared channel and drops the CSI.

5. The terminal according to claim 1, wherein
when simultaneous transmission of the HARQ-ACK and the CSI is not configured, the transmission period of the HARQ-ACK using an uplink control channel and the transmission period of the CSI using an uplink shared channel are overlapped, and data transmission by means of the uplink shared channel is not present, the control section transmits the HARQ-ACK by means of the uplink control channel and drops the uplink shared channel.

6. The terminal according to claim 1, wherein
when simultaneous transmission of the HARQ-ACK and the CSI is not configured, the control section assumes that the transmission period of the HARQ-ACK using an uplink control channel and the transmission period of the CSI using an uplink shared channel are not configured in an overlapped manner.
